# EUROPEAN PATENT APPLICATION

(11) **EP 2 716 186 A1**
(43) Date of publication of application: **09.04.2014**
(21) Application number: 12187644.5
(22) Date of filing: 08.10.2012
(51) Int. Cl.: A47J 27/00, A47J 43/07

(54) **Apparatus with mixing bowl, base, and magnetic means**

(71) Applicant: Evans, Damian, London W4 4PH (GB)
(72) Inventor: Evans, Damian, London W4 4PH (GB)
(74) Representative: Nordmeyer, Philipp Werner

(57) **Abstract**

An assembly (100) comprising a base (110, 210) and a mixing bowl (120, 220), the base (110, 210) being adapted to receive the mixing bowl (120, 220), the base (110, 210) having a receiving surface with a concave part (112, 212), the mixing bowl (120, 220) having an outer surface with a convex part (121, 221) positively fitting into the concave part (112, 212), wherein, in a connected position, the convex part (121, 221) and the concave part (112, 212) are adjacently connected, characterized in that, in the connected position, the mixing bowl is rotatable with regard to the base around at least one axis of all axes intersecting a centre point, and in that in the connected position, the base (110, 210) and the mixing bowl (120, 220) are releasably held together by magnetic means (116), preferably via a magnetic interaction between the base (110, 210) and the mixing bowl (120, 220).

## Description

The invention relates to an apparatus comprising a mixing bowl, a base, and magnetic means.

For many purposes, e.g., in science industry, and cooking, materials must be mixed (whereby mixing in the sense of this application may also refer to whisking, and/or, stirring) at a predefined temperature or at a predefined course of temperature.

Generally, for providing and keeping material at a predefined temperature, (mixing) bowls of the bain-marie type are used. A bain-marie may come in a wide variety of shapes, sizes, and types but traditionally is a wide, cylindrical, usually metal container comprising: an outer (or lower) container and an inner (or upper) container designed so that it fits inside the outer container. The inner container holds the material to be heated and mixed; therefore, the inner container can be regarded as a mixing bowl. The outer container holds the working liquid (usually water). Under the outer container of the bain-marie (or built into its base) is a heat source. Typically the mixing bowl is immersed about halfway into the working liquid. Due to direct contact between the mixing bowl and the working fluid, the mixing bowl surface (inner and outer) assumes substantially the same temperature as the working fluid. This bain-marie type of heating a mixing bowl has several advantageous effects, for example: (1) The temperature of the inner surface of the bain-marie mixing bowl may not rise above the boiling temperature of the working fluid. (2) The boiling temperature may be adjusted by changing and/or adjusting the working fluid (e.g., water, water with different salt concentrations, oil, etc.). (3) Across a major part of the inner surface of the bain-marie mixing bowl, there is little (almost no) temperature variation, namely that part of the inner surface that corresponds to the outer surface part being in direct contact with the working fluid. These effects are in particular useful for bringing or keeping material contained in the mixing bowl to a predefined temperature and/or preventing said material from boiling or scorching.

Frequently, the material contained in the mixing bowl must also be mixed, for example, because a homogenous temperature distribution within the material is required. However, while the bain-marie provides a homogenous temperature distribution across the inner surface of the inner container, within the material itself, large temperature variations can arise. By mixing the material, temperature variations are kept small and the entire material substantially assumes the same temperature. Mixing is also required, for example, to blend material ingredients smooth or to incorporate air into the material in a process known as whisking or whipping (e.g. whipping egg whites into firm foam to make meringue, or whipping cream into whipped cream). For mixing, it is beneficial to have the mixing bowl arranged in a tilted position so that the mixing equipment interacts most efficiently and safely with the mixing bowl and the material therein and so that spilling of vigorously mixed material is reduced or even prevented. Cooks, for example, habitually hold a mixing bowl in a tilted position with one hand while mixing the material with the other hand.

Problems arise when material is to be mixed in a tilted mixing bowl: Generally, for efficiently and safely mixing material in a mixing bowl, the bowl should be held in an especially stable position because the interaction between the mixing equipment, the material, and (ultimately) the mixing bowl exerts such large forces on the mixing bowl that it would otherwise slip or fall.

Additional problems arise when material is to be mixed in a tilted mixing bowl at a predefined temperature: Specifically, within a conventional bain-marie assembly, an accordingly tilted position does not meet stability requirements. For tilting, the mixing bowl, i.e. the inner container of the bain-marie, has to be at least slightly raised from the outer container. In this configuration the two containers cannot interact in such a manner that the outer container provides a stable base for the inner container. Mixing the material accordingly may rapidly move the inner container relative to the outer container thereby displacing the working fluid and causing it to surge and spill from the outer container. For obvious reasons spilling of working fluid should be avoided and/or prevented. Spilling should especially be prevented if the working fluid is not water but, e.g., oil, salt solution, or even a hazardous fluid. Of course, the inner container can be removed from the fluid bath for mixing. Taking the inner container from the working fluid, however, by itself frequently results in spilling of working fluid unless outmost care is exerted. Further, the inner container cools off because heat can only be supplied thereto if the container is in direct contact in the fluid bath. Cooling off is especially undesirable if the processing of the material is highly temperature dependent and may only succeed in a very narrow temperature range. Finally, changing the maximum working temperature is not a matter easily achieved; on the contrary, typically, the entire working fluid must be exchanged.

A conventional mixing bowl/bain-marie is known.

The present invention has been devised and embodied to overcome at least some of the abovementioned shortcomings and to obtain further advantages.

### SUMMARY OF THE INVENTION

The invention is set forth and characterized in claim 1, while the dependent claims describe other characteristics of the invention.

According to an aspect of the invention, the assembly comprises a base and a mixing bowl, the mixing bowl being a vessel that is suitable to carry material. Material in this sense may be anything edible such as foods, drinks, and raw material therefore, however, it may also be chemicals, compounds, building materials, etc. The base is the bottom part of the assembly, and one of its functions is to serve as the support of the mixing bowl. Accordingly, the base is adapted to receive the mixing bowl. For this purpose, the base has a receiving surface with a concave part, and the mixing bowl has an outer surface with a convex part positively fitting into said concave part. In most embodiments of the invention the concave part is a spherical recess, the edge of the spherical recess being located at the top of the base such that the edge is a circle, which preferably lies in a horizontal plane if the base sits on a horizontal support. However, other designs are also possible. The spherical recess, for example, could also comprise irregularities, such as a (central) hole that reaches all the way through the base. Alternatively the edge of the spherical recess may be located within an inclined plane. This would form lead to the edge having the shape of a potentially broken ellipse. The mixing bowl has, as mentioned above, a convex part that positively fits into the concave part of the base. Consequently, in most embodiments, the convex part is also spherical.

In a connected position, the convex part and the concave part are adjacently connected. The mixing bowl and the base can be connected and disconnected. In the connected position (which is to be understood as a connected configuration of the base and the mixing bowl) the convex part of the mixing bowl and the concave part of the base are relatively positioned so that they make contact over a significant part of their respective surfaces.

In the connected position, the base and the mixing bowl are releasably held together by magnetic means. In particular, the base and the mixing bowl may be releasably held together by magnetic means via a magnetic interaction between the base and the mixing bowl. Magnetic means may be any means that are suitable for producing and/or generating forces of magnetic origin, said forces acting between the base and the mixing bowl, and said forces pulling the base and the mixing bowl together.

In a preferred embodiment, in the connected position, the mixing bowl is rotatable with regard to the base around at least one axis of all axes intersecting a centre point. Accordingly, the mixing bowl, in particular its convex part, and the base, in particular its convex part, are designed in such a way that, in the connected position, the mixing bowl may be rotated around at least one axis, a first axis. Nonetheless, it is possible that the mixing bowl may be rotated around additional axes that intersect the first axis at a centre point. It is even possible that the mixing bowl may be rotated around each axis that intersects said centre point. The latter is, for example, the case if the convex part and the concave part are both spherical, and the mixing bowl and the base do not have any features (such as recessions, abutments, guiding tracks, or protrusions) that interact with each other so that rotation around one or more axis is prevented. On the contrary, the mixing bowl and the base may have features (such as recessions, abutments, guiding tracks, or protrusions) that interact with each other so that rotation around one or more axis is prevented.

In a preferred embodiment of the invention, the concave part and the convex part are substantially spherical or spherical.

In another preferred embodiment, all points lying on the concave part and on the convex part are substantially equidistant or equidistant from the centre point. In other words the concave part and the convex part are of substantially identical or identical radius.

In another preferred embodiment, the force caused by the magnetic means acting between the base and the mixing bowl is smaller than the gravitational force acting on the base. This embodiment is advantageous because the user of the assembly may simply pull the mixing bowl away from the base without the need of holding and/or fixating the base.

In another preferred embodiment, the force caused by the magnetic means acting between the base and the mixing bowl is sufficiently large so that , the mixing bowl maintains its orientation with regard to the base in the connected position, if no external force is exerted on the mixing bowl apart from gravity acting on the mixing bowl and, if applicable, on the content of the mixing bowl. This embodiment is advantageous because the user, in the connected position, may set up a specific rotational orientation of the mixing bowl with regard to the base, the orientation meeting his current needs (for example, in view of ergonomics), and the assembly remains in this specific rotational orientation, preferably even when typical mixing forces are exerted on the mixing bowl.

In another preferred embodiment, the latter effect (i.e., the force cause by the magnetic means maintain a rotational orientation) is enhanced by the surface characteristics of the concave part and the convex part. Said surface characteristics are such that the static friction between the two surfaces contributes to maintaining a rotation orientation.

In another preferred embodiment, the magnetic means are switchable between at least two configurations, wherein, in the connected position, a different magnetic force acts between the base and the mixing bowl for each of the at least two configurations. The switchable magnetic means may be a switchable permanent magnet holding device. The switchable magnetic means in the form of a switchable permanent magnet holding device may have two or more configurations, each configuration providing a different magnetic force acting between the mixing bowl and the base. The magnetic means may be part of the base, the mixing bowl, and/or part of both the base and the mixing bowl. Further, the switchable magnetic means may also be an electromagnet, which is a type of magnet in which the magnetic field is produced by the flow of electric current. The electromagnet allows for rapidly changing the magnetic force between the mixing bowl and the base over a wide range by controlling the electric current. This embodiment is advantageous because user may change the magnetic force acting between the mixing bowl and the base according to his/her needs. For removing or rotating the mixing bowl in the connected position, the magnetic force may be reduced to allow for easy movement of the mixing bowl with regard to the base. For mixing material in the mixing bowl in the connected position, the magnetic force may be enhanced to substantially lock the relative position between the mixing bowl and the base.

In another preferred embodiment, the magnetic means are comprised by the base and the mixing bowl comprises or consists of ferromagnetic material.

In another preferred embodiment, the magnetic means are comprised by the mixing bowl and the base comprises or consists of ferromagnetic material.

In another preferred embodiment, the base comprises holding means for releasably attaching the base to a structure supporting the base. This embodiment is advantageous because the user may simply pull the mixing bowl away from the base without the need of manually holding the base. Thereby, the magnetic force is not limited by the gravitational force acting on the base.

In another preferred embodiment, the base comprises heater means for selectively heating at least a part of the mixing bowl when the mixing bowl is in the connected position. Heater means in this sense may be any device, apparatus, or functional unit that is suitable for heating at least a portion of the mixing bowl, such as heater means based on resistive heating, based on inductive heating, or based on gas heating. In the case that the heater means are based on resistive heating, the heater means may comprise resistive heating coils that are arranged and designed so that the heat created by the heating coils is transferred to the concave part of the base. The concave part could be iron or glass-ceramic. In the case that the heater means are based on inductive heating, the heating means may comprise a coil of copper wire, which is arranged and designed such that it is located close and underneath the mixing bowl in the connected position. An alternating electric current flows through the coil, which produces an oscillating magnetic field. This field induces an electric current in the mixing bowl. Electric current flowing in the mixing bowl produces resistive heating. This embodiment is advantageous because the user may conveniently mix material in the mixing bowl, while the material is heated evenly within the mixing bowl.

In another preferred embodiment, the heater means comprise an induction cooker, and wherein the mixing bowl at least partially consists of a ferromagnetic material. This embodiment is advantageous because an induction cooker is faster and more energy-efficient than a traditional electric cooker. It allows instant control of cooking energy similar to gas burners. Because induction heats the cooking vessel itself, the possibility of burn injury is significantly less than with other methods; the surface of the cook top is only heated from contact with the vessel. There are no flames or red-hot electric heating elements as found in traditional cooking equipment. The induction effect does not heat the air around the vessel, resulting in improved energy efficiency. Conveniently, in practise induction cookers are designed for ferromagnetic vessels (such as mixing bowls), which also stick to magnets. In view of the magnetic means that releasably hold together the mixing bowl and the base, conveniently, the mixing bowl may entirely or at least partially be made of a ferromagnetic material. The ferromagnetic material of the mixing bowl thereby serves two purposes: first, heat is created in the ferromagnetic material in co-operation with the induction cooker of the base. Second, the ferromagnetic material serves as point of action of the magnetic forces generated by the magnetic means if the magnetic means are an electromagnet or a permanent magnet comprised in the base.

It is to be understood that the magnetic means for releasably holding the mixing bowl are different from the induction cooker used as the heater means. Expressed differently the induction cooker generates an alternating magnetic field different from the magnetic field generated by the magnetic means.

In another preferred embodiment, the induction cooker monitors how much power is being absorbed. This embodiment is advantageous because monitoring power consumption allows such functions as keeping a mixing bowl at minimal boil or automatically turning an element off when the mixing bowl and/or its content is removed from the base.

In another preferred embodiment, the base comprises at least one thermometer, wherein the at least one thermometer is adapted for measuring a temperature of the mixing bowl at at least one position on the mixing bowl. Conveniently the at least one position on the mixing bowl may be chosen within the heated portion of the mixing bowl. This embodiment is advantageous because it allows monitoring and displaying the current temperature of the mixing bowl. In a preferred embodiment, multiple thermometers are arranged close to the concave part of the base. This embodiment is advantageous because it allows both to determine an average temperature of multiple spots on the mixing bowl and to determine the temperature of the mixing bowl with spatial resolution. E.g., the temperature of the mixing bowl could be determined for different zones of the mixing bowl.

In another preferred embodiment, the base comprises a controller. Further, the at least one thermometer is connected to the controller for transmitting the temperature measured at the at least one position on the mixing bowl to the controller. The controller is adapted to control the heater means in response to the temperature of the mixing bowl at the at least one position. The controller may, for example change the power output of the heater means. The change in heater output may cause a change in temperature of the mixing bowl arranged in the connected position. This embodiment is advantageous because it allows, for example, setting up a predefined temperature or a predefined temperature course in the controller, wherein the controller controls the power output of the heating means so that the mixing bowl assumes and/or maintains the predefined temperature (or predefined temperature course). Likewise such a controller is adapted to monitor a cooling down of a substance within the mixing bowl even if there are no heating means provided. This embodiment is advantageous because it allows a convenient way to monitor cooling down of delicate ingredients.

In another preferred embodiment, the mixing bowl is a bain-marie. It is of advantage with the bain-maire of the preferred embodiment to have the bain-marie releasably attached to the base by the magnetic means. This means less things to care about when setting up the bain-marie than with the bain-maire of the prior art.

In another preferred embodiment, the mixing bowl is a wok. It will be appreciated by a person skilled in the art that it is of advantage to form a wok using the invention: The wok according to the preferred embodiment is held in place securely by the magnetic means. Therefore a risk of spillage of hot material from within the wok is reduced.

In another preferred embodiment, the mixing bowl is a rice steamer. The rice steamer according to the preferred embodiment is of advantage over the prior art in terms of energy-efficiency and safety in use.

### BRIEF DESCRIPTION OF THE DRAWINGS

These and other characteristics of the invention will be clear from the following description of a preferential form of embodiment, given as a non-restrictive example, with reference to the attached drawings wherein:
Fig. 1A shows a perspective view of a first embodiment of the invention in the connected position;
Fig. 1 B shows another perspective view of the first embodiment of the invention in the connected position;
Fig. 1C shows another perspective view of the first embodiment of the invention in a disconnected position;
Fig. 1 D shows another perspective view of the first embodiment of the invention in a disconnected position, wherein the housing of the base is removed;
Fig. 2A is a side view of the first embodiment of the invention;
Fig. 2B is a cross section of the mixing bowl according to a second embodiment of the invention;
Fig. 2C is a perspective view of the second embodiment of the invention;
Fig. 3A is a perspective view of the second embodiment of the invention in the connected position;
Fig. 3B is a perspective view of the second embodiment of the invention in a disconnected position;
Fig. 3C is an exploded view of the base according to the second embodiment of the invention;
Fig. 3D is a perspective view of the second embodiment of the invention in the connected position;
Fig. 4A is an exploded view of the base according to the second embodiment of the invention; and
Fig. 4B is a bottom view of the base according to the second embodiment of the invention;

### DETAILED DESCRIPTION OF A PREFERENTIAL EMBODIMENT

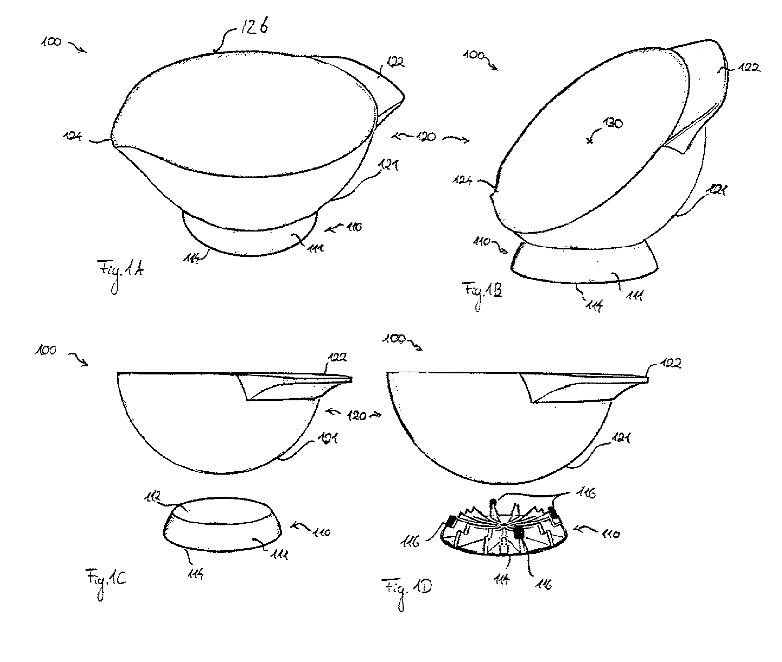

With reference to figures 1A to 2A, an assembly 100 according to a first embodiment comprises a base 110 and a mixing bowl 120. The mixing bowl 120 consists of a ferromagnetic nearly hemispherical vessel 121, which serves as the convex part of the mixing bowl 120 to be connected to the base 110. A handle 122 and a lip 124 are arranged at opposing sides of a vessel edge 126.

The base 110 is adapted to receive the mixing bowl 120, in particular its convex part in form of the hemispherical vessel 121. For this purpose, the base has a receiving surface with a concave part in form a spherical recession 112. The convex part 121 of the mixing bowl 120 positively fits into this spherical recession 112. Figure 1A and figure 1 B specifically show the connected position, wherein the convex part 121 of the mixing bowl 120 and the concave part 112 of the base 110 are adjacently connected. While in figure 1A the mixing bowl 120 is oriented horizontally with regard to the base 110 (i.e., the plane of the vessel edge 126 and the plane of the bottom 114 of the base 110 are aligned in parallel), the mixing bowl 120 is tilted with regard to the base 110, in Figure 1 B. Such tilting is possible because, in the connected position, the mixing bowl 120 is rotatable with regard to the base 110 around all axes intersecting a centre point 130, wherein the centre point 130 is positioned in the centre of the hemispherical vessel 121 so that, in the connected position, all points lying on the concave part 112 and on the convex part 121 are substantially equidistant or equidistant from the centre point 130. In other words the concave part 112 and the convex part 121 are of identical or substantially identical radius.

It is to be understood that the tilting may still be possible if the mixing bowl 120 is rotatable with regard to the base 110 only around some of the axes intersecting the centre point 130. Abutments, ridges and the like (not shown) in the mixing bowl 120 and/or the base 110 may limit the number of axes intersecting the centre point 130 around which the mixing bowl 120 is rotatable with regard to the base 110.

In the connected position, the base 110 and the mixing bowl 120 are releasably held together by magnetic means 116 (best seen in Figure 1 D) shown in the form of four neodymium magnets 116 symmetrically arranged within the base 110. The person skilled in the art will appreciate that fewer or more magnets 116 may be used. Likewise the magnets 116 are not limited to neodymium magnets but could also be implemented as small electromagnets or any other type of magnet known in the art. The magnetic interaction between the magnetic means 116 of the base 110 and the mixing bowl 120 releasably holds the mixing bowl 120 and the base 110 together. The magnetic interaction results from the magnetic field of the neodymium magnets 116 (permanent magnets) interacting with the ferromagnetic hemispherical vessel 121 of the mixing bowl 120.

The force caused by the magnetic means 116 acting between the base 110 and the mixing bowl 120 may be chosen smaller than the gravitational force acting on the base 120. Said force may, nonetheless, be sufficiently large so that , the mixing bowl 120 maintains its orientation with regard to the base in the connected position, if no external force (apart from gravity acting on the mixing bowl 120 and, if applicable, on the content of the mixing bowl 120) is exerted on the mixing bowl 120.

Figure 1C and figure 1D show the assembly 100 according to the first embodiment in a disconnected position. In figure 1D , the housing 111 of the base 110 is removed so that the inside of the base 110, including the neodymium magnets 116, is revealed.

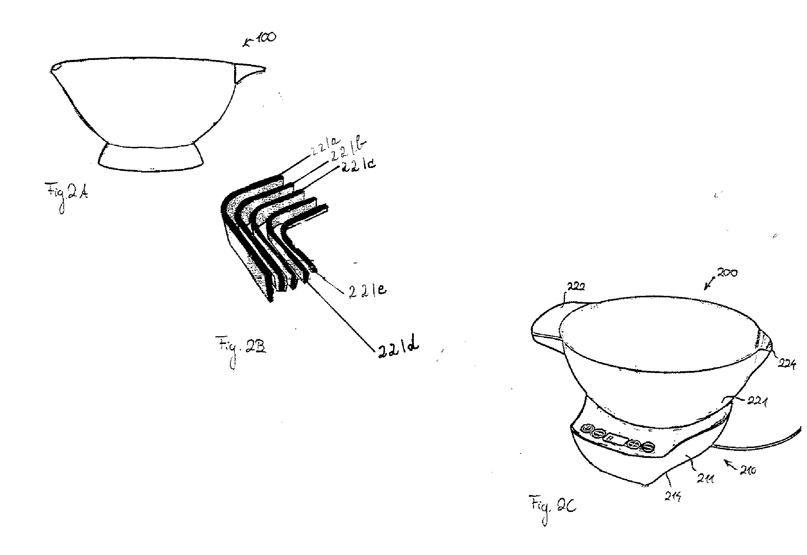

In figures 2B to 4B, an assembly 200 according to a second embodiment is shown. The second embodiment differs from the first embodiment mainly because the base 210 comprises a conduction cooker, 250 to 270. The mixing bowl 220 consists of a nearly hemispherical vessel. Figure 2B shows a cross section of the wall of said hemispherical vessel. The wall of the hemispherical vessel 221 consists of five subwalls. Counting inwards, the first and outermost wall 221a consists of ferromagnetic stainless steel. The second wall 221 b consists of aluminum. The third wall 221 c consists of copper. The fourth wall 221d consists of aluminum. The fifth and innermost wall 221e consists of 18/10 stainless steel. The hemispherical vessel 221 serves as the convex part of the mixing bowl 220 to be connected to the base 210. A handle 222 and a lip 224 are arranged at opposing sides of the vessel edge 226.

It is to be understood that the combination of materials from which the first wall 221a, the second wall 221b, the third wall 221c, the fourth wall 221d and the fifth wall 221e are made is given for illustrative purpose only. A person skilled in the art will readily identify material combinations adapted to help an even heating characteristic of the mixing bowl 220. Therefore less or more than five subwalls 221a, 221b, 221c, 221d and 221e are conceivable. A person skilled in the art will readily understand that fewer or more subwalls may be used in order to form the wall of the hemispherical vessel 221. It is convenient to provide at least one ferromagnetic subwall adapted to interact with the magnetic means 216. It is further convenient for the ferromagnetic subwall to be arranged as the first and outermost wall in order to reduce a distance between the ferromagnetic subwall and the magnetic means 216.

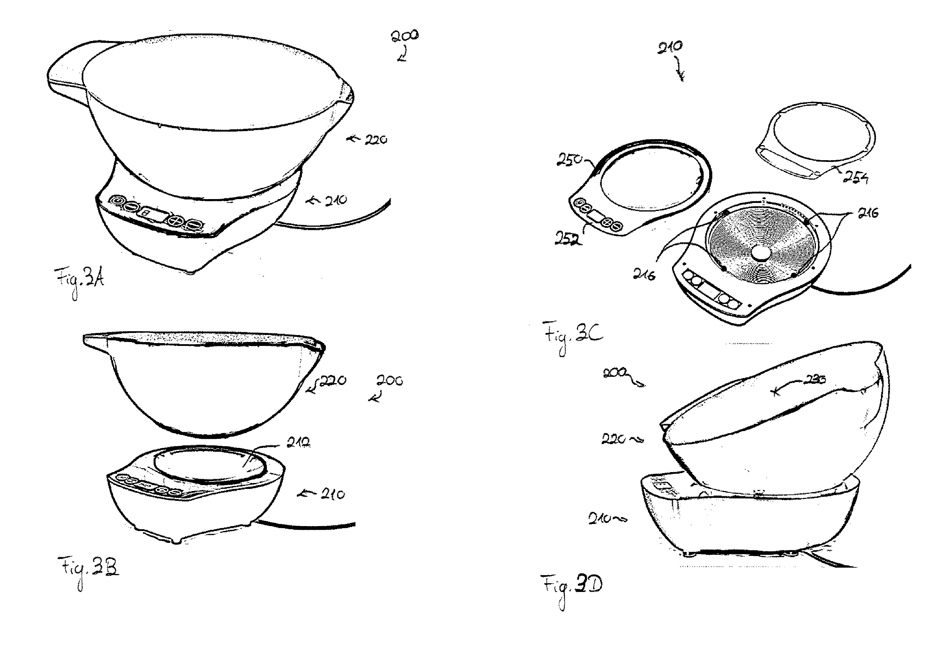

The base 210 is adapted to receive the mixing bowl 220, in particular its convex part in form of the hemispherical vessel 221. For this purpose, the base has a receiving surface with a concave part in form of a spherical recession 212. The convex part 221 of the mixing bowl 220 positively fits into this spherical recession 212. Figure 2C, 3A, and figure 3D specifically show the connected position, wherein the convex part 221 of the mixing bowl 220 and the concave part 212 of the base 210 are adjacently connected. While in figures 2C and 3A the mixing bowl 220 is oriented horizontally with regard to the base 210 (i.e., the plane of the vessel edge 226 and the plane of the bottom 214 of the base 210 are aligned in parallel), the mixing bowl 220 is tilted with regard to the base 210 in Figure 3D.

Such tilting is possible because, in the connected position, the mixing bowl 220 is rotatable with regard to the base 210 around all axes intersecting a centre point 230, wherein the centre point 130 is positioned in the centre of the hemispherical vessel 221 so that, in the connected position, all points lying on the concave part 212 and on the convex part 221 are substantially equidistant or equidistant from the centre point 230, as was already explained with regard to the first embodiment. Likewise abutments, ridges and the like (not shown) in the mixing bowl 120 and/or the base 110 may limit the number of axes intersecting the centre point 130 around which the mixing bowl 120 is rotatable with regard to the base 110. Such abutments, ridges and the like are also conceivable for the second embodiment.

In the connected position, the base 210 and the mixing bowl 220 are releasably held together by magnetic means 216 in the form of four neodymium magnets 216 symmetrically arranged within the base 210. The skilled person will appreciate that fewer or more magnets 216 may be used. Likewise the magnets 116 are not limited to neodymium magnets but could also be implemented as small electromagnets or any other type of magnet known in the art, as was explained for the first embodiment. The magnetic interaction between the magnetic means 216 of the base 210 and the mixing bowl 220 releasably hold the mixing bowl 220 and the base 210 together. The magnetic interaction results from the magnetic field of the neodymium magnets 216 (permanent magnets) interacting with the ferromagnetic hemispherical vessel 221 of the mixing bowl 220.

As for the first embodiment, the force caused by the magnetic means 216 acting between the base 210 and the mixing bowl 220 may be chosen smaller than the gravitational force acting on the base 220. Said force may, nonetheless, be sufficiently large so that, in the connected position, the mixing bowl 220 maintains its orientation with regard to the base if no external force is exerted on the mixing bowl 220 apart from gravity acting on the mixing bowl 220 and, if applicable, on the content of the mixing bowl 220.

Figure 3B shows the assembly 200 according to the second embodiment in a disconnected position.

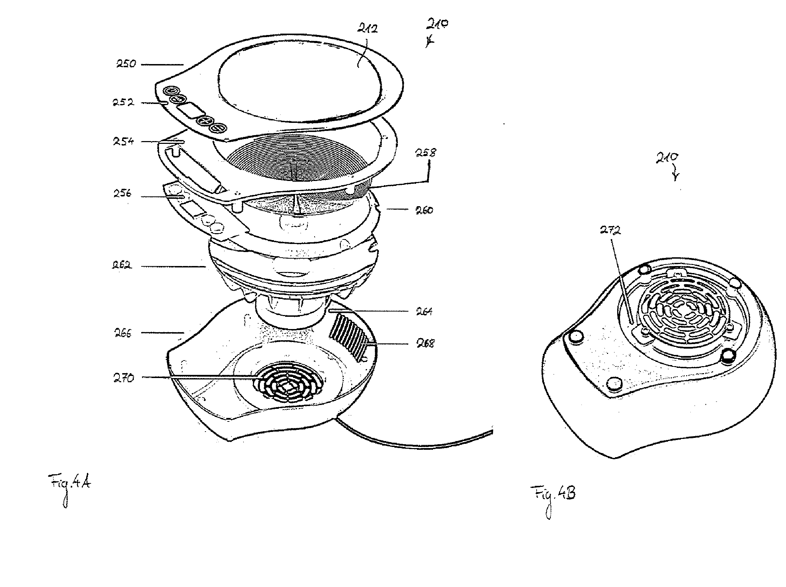

Figure 4A shows an exploded view of the base 210 according to the second embodiment. The base 210 comprises multiple parts, the topmost part being the glass top cover 250 with touch controls 252 that serve as user input means for inputting data into controller in form of circuit board 256. The glass top cover lies on top of a cover retention molding 254. The glass top cover 252 further forms the concave part 212 of the base 210. The induction cooker copper coil 258 is arranged directly below the concave part 212. By means of a coil support moulding 260, the coil 258 is in turn arranged directly above an aluminum heat sink 262, which by means of a fan unit 264, air inlet slots 270, and air outlet slots 268 in the base moulding 266 provide for cooling of the coil 258 and the top plate.

Figure 4B shows a bottom view of the base moulding 266, the base moulding 266 having a recess 272 for winding a power supply cable into it.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

### Reference Numerals

- 100: assembly
- 110, 210: base
- 112, 212: concave part
- 114: bottom of the base
- 116: magnetic means

- 120, 220: mixing bowl
- 121, 221: convex part or hemispherical vessel
- 122: handle
- 124: lip
- 126: vessel edge

- 130: centre point

- 160: magnetic means

- 250: glass top cover
- 252: touch controls
- 254: cover retention moulding
- 256: circuit board
- 258: induction cooker copper coil
- 260: coil support moulding
- 262: heat sink
- 264: fan unit
- 266: base moulding
- 268: air outlet slots
- 270: air inlet slots
- 272: recess for winding power supply cable

## Claims

1. An assembly (100) comprising a base (110, 210) and a mixing bowl (120, 220),
the base (110, 210) being adapted to receive the mixing bowl (120, 220),
the base (110, 210) having a receiving surface with a concave part (112, 212),
the mixing bowl (120, 220) having an outer surface with a convex part (121, 221) positively fitting into the concave part (112, 212),
wherein, in a connected position, the convex part (121, 221) and the concave part (112, 212) are adjacently connected,
**characterized in that,**
in the connected position, the base (110, 210) and the mixing bowl (120, 220) are releasably held together by magnetic means (116), preferably via a magnetic interaction between the base (110, 210) and the mixing bowl (120, 220).

2. The assembly (100) according to claim 1, wherein in the connected position, the mixing bowl (120, 220) is rotatable with regard to the base around at least one axis of all axes intersecting a centre point (130).

3. The assembly (100) according to one of the preceding claims, wherein the concave part (112, 212) and the convex part (121, 221) are substantially spherical or spherical, and are of identical or substantially identical radius.

4. The assembly (100) according to one of the preceding claims, wherein the force caused by the magnetic means (116) acting between the base (110, 210) and the mixing bowl (120, 220) is smaller than the gravitational force acting on the base (110, 210).

5. The assembly (100) according to one of the preceding claims, wherein the force caused by the magnetic means (116) acting between the base (110, 210) and the mixing bowl (120, 220) is sufficiently large so that, the mixing bowl (120, 220) maintains its orientation with regard to the base (110, 210) in the connected position, if no external force is exerted on the mixing bowl (120, 220) apart from gravity acting on the mixing bowl (120, 220) and, if applicable, on the content of the mixing bowl (120, 220).

6. The assembly (100) according to one of the preceding claims, wherein the magnetic means (116) are switchable between at least two configurations, wherein, in the connected position, a different magnetic force acts between the base (110, 210) and the mixing bowl (120, 220) for each of the at least two configurations.

7. The assembly (100) according to one of the preceding claims, wherein the magnetic means (116) are comprised by the base (110, 210) and the mixing bowl (120, 220) comprises or consists of ferromagnetic material, or wherein the magnetic means (116) are comprised by the mixing bowl (120, 220) and the base comprises or consists of ferromagnetic material.

8. The assembly (100) according to one of the preceding claims, wherein the base (110, 210) comprises holding means for releasably attaching the base (110, 210) to a structure supporting the base (110, 210).

9. The assembly (100) according to one of the preceding claims, wherein the base (110, 210) comprises heater means for selectively heating at least a portion of the mixing bowl (120, 220) when the mixing bowl (120, 220) is in the connected position.

10. The assembly (100) according to claim 9, wherein the heater means comprise an induction cooker, and wherein the mixing bowl (120, 220) at least partially consists of a ferromagnetic material.

11. The assembly (100) according to one of claims 9 or 10, wherein the base (110, 210) comprises at least one thermometer, wherein the at least one thermometer is adapted for measuring a temperature of the mixing bowl (120, 220) at at least one position on the mixing bowl (120, 220).

12. The assembly (100) according to one of the claims 10 or 11, wherein the induction cooker generates an alternating magnetic field different form the magnetic field generated by the magnetic means (116).

13. The assembly (100) according to one of the claims 11 or 12, wherein the base (110, 210) comprises a controller, and wherein the at least one thermometer is connected to the controller for transmitting the temperature of the mixing bowl (120, 220) at the at least one position to the controller, wherein the controller is adapted to control the heater means in response to the temperature of the mixing bowl (120, 220) at the at least one position.

14. The assembly (100) according to one of the preceding claims, wherein the mixing bowl (120, 220) is a bain-marie.

15. The assembly (100) according to one of the preceding claims, wherein the mixing bowl (120, 220) is a wok or a rice steamer.
